# EUROPÄISCHE PATENTANMELDUNG

(11) **EP 1 043 657 A1**
(43) Veröffentlichungstag der Anmeldung: **11.10.2000**
(21) Anmeldenummer: 99106819.8
(22) Anmeldetag: 06.04.1999
(51) Int. Cl.: G06F 9/44, G05B 13/02

(54) **Softwareobjekt, System und Verfahren für ein Automatisierungsprogramm mit Funktionsregeln mit Mehrfachnutzung für verschiedene Programmierwerkzeuge**

(71) Anmelder: SIEMENS AKTIENGESELLSCHAFT, 80333 München (DE)
(72) Erfinder: Haardörfer, Jürgen, 90574 Rosstal (DE); Jachmann, Thomas, 90475 Nürnberg (DE); Winter, Ulrich, 91790 Burgsalach (DE)

(57) **Zusammenfassung**

Die Erfindung betrifft ein Softwareobjekt, ein System und ein Verfahren zur Abbildung von Funktionsregeln für ein Automatisierungsprogramm mit Mehrfachnutzung für verschiedene Programmierwerkzeuge. Zur Erzielung eines gemeinsamen Datenformats wird vorgeschlagen, ein aus Zeichenketten bestehendes Datenformat zu verwenden, das einen boole'schen Ausdruck enthält, wobei der boole'sche Ausdruck mindestens einem Ergebnis als Funktionsregel zugewiesen werden kann.

## Beschreibung

Die Erfindung betrifft ein Softwareobjekt für ein Automatisierungsprogramm, ein System und ein Verfahren zur Erstellung, Steuerung und/oder Überwachung eines technischen Prozesses mit mindestens einem Softwareobjekt.

Ein derartiges Softwareobjekt, System und Verfahren kommt insbesondere im Zusammenhang mit einem Automatisierungssystem zur Steuerung und/oder Überwachung eines technischen Prozesses zur Anwendung. Dabei wird beispielsweise festgelegt, wie Meßgrößen des Prozesses auf Stellgrößen des Prozesses einwirken. Für die Erstellung, Bearbeitung, Analyse und Anzeige eines derartigen Automatisierungsprogramms kommen Programmierwerkzeuge zum Einsatz, die auf einer Datenverarbeitungsvorrichtung ablauffähig sind und in der Lage sind, das Automatisierungsprogramm, bzw. einen Teil eines Automatisierungsprogramms graphisch anzuzeigen. Hierzu sind verschiedene Darstellungsarten für das Automatisierungsprogramm möglich, beispielsweise Struktogramme, Zustandsautomaten, Stromlaufpläne, Funktionspläne etc. Manche Automatisierungsprogramme sind in der Lage, auf verschiedene Arten dargestellt zu werden, beispielsweise als Struktogramm oder als Programm-Ablaufplan, als Stromlaufplan oder als Funktionsplan.

Der Erfindung liegt die Aufgabe zugrunde, ein Softwareobjekt, ein System und ein Verfahren zur Abbildung von Funktionsregeln für ein Automatisierungsprogramm anzugeben, das für verschiedene Programmierwerkzeuge möglichst universell einsetzbar ist.

Diese Aufgabe wird durch ein Softwareobjekt für ein Automatisierungsprogramm gelöst, das folgende Merkmale aufweist: Das Softwareobjekt ist zur Bearbeitung von einer Softwarekomponente zugeordneten Funktionsregeln vorgesehen und die Funktionsregeln weisen ein aus einer Zeichenkette bestehendes gemeinsames Datenformat auf, das mindestens einen boole'schen Ausdruck enthält, der mindestens einem Ergebnis als Funktionsregel zugeordnet ist.

Diese Aufgabe wird weiter durch ein System zur Erstellung, Steuerung und/oder Überwachung eines technischen Prozesses gelöst, mit mindestens einem Softwareobjekt das folgende Merkmale aufweist: Das Softwareobjekt ist zur Bearbeitung von einer Softwarekomponente zugeordneten Funktionsregeln vorgesehen und die Funktionsregeln weisen ein aus einer Zeichenkette bestehendes gemeinsames Datenformat auf, das mindestens einen boole'schen Ausdruck enthält, der mindestens einem Ergebnis zugeordnet ist.

Diese Aufgabe wird weiter durch ein Verfahren zur Erstellung, Steuerung und/oder Überwachung eines technischen Prozesses mit mindestens einem Softwareobjekt gelöst, bei dem dem Softwareobjekt Funktionsregeln eines Automatisierungs-Programms zugeordnet werden und bei dem die Funktionsregeln aus einem aus einer Zeichenkette bestehenden gemeinsamen Datenformat gebildet werden, das mindestens einen boole'schen Ausdruck enthält, dem mindestens ein Ergebnis als Funktionsregel zugeordnet ist.

Der Erfindung liegt die Erkenntnis zugrunde, daß für die Erstellung und Bearbeitung von Funktionsregeln für Automatisierungsprogramme bisher eine Vielzahl verschiedener Datenstrukturen verarbeitet werden mussten, was bei einer Konvertierung der Datenstrukturen die Anwendung eines Compilers oder Rückübersetzers erforderlich macht. Ein derartiger Umgang mit mehreren Datenstrukturen stellt somit einen erhöhten Aufwand dar. Durch die Ausbildung der Funktionsregeln als boole'sche Ausdrücke steht dem Automatisierungsprogramm und gegebenenfalls den für das Automatisierungsprogramm vorgesehenen Programmierwerkzeugen ein gemeinsames einheitliches Datenformat für Bedingungen zur Verfügung, das aus einer einfachen Zeichenkette besteht und somit programmiersprachen- und plattformunabhängig einsetzbar ist. Durch dieses gemeinsame Datenformat lassen sich weitere Darstellungsarten realisieren, die auf diesem Format arbeiten. Auch in bereits existierende Systeme lassen sich derartige Darstellungsarten mit geringem Aufwand einbinden. Durch die Verwendung von Zeichenketten besteht zudem die Möglichkeit, das Datenformat zu erweitern und dadurch neue Sprachkonstrukte zu unterstützen.

Eine einfache und sichere Identifikation einzelner Elemente eines boole'schen Ausdrucks, beispielsweise Operanden, wird dadurch ermöglicht, daß einzelne Elemente des boole'schen Ausdrucks Attribute erhalten, welche zur Unterscheidung von Elementen des boole'schen Ausdrucks dienen. Außer zur Identifikation können auch Attribute für andere Zwecke definiert werden, z.B.: Erstellungsdatum, Benutzerkennungen, Zustände, ...

Im folgenden wird die Erfindung anhand der in den Figuren dargestellten Ausführungsbeispiele näher beschrieben und erläutert.

### Es zeigen:

- FIG 1: ein Blockschaltbild zum Grundaufbau einer Softwarekomponente und zur Einbettung eines Softwareobjekts in ein Automatisierungsprogremm sowie in verschiedene Programmierwerkzeuge,
- FIG 2: eine schematische Darstellung zum Grundaufbau einer aus boole'schen Ausdrücken aufgebauten Funktionsregel,
- FIG 3: eine beispielhafte Darstellung einer Oberflächenkomponente als Kontaktplan,
- FIG 4: eine beispielhafte Darstellung der in Fig. 3 dargestellten Oberflächenkomponente als Funktionsplan,
- FIG 5: eine erste beispielhafte Darstellung einer Funktionsregel der in den Fig. 3 und 4 dargestellten Oberflächenkomponenten,
- FIG 6: eine zweite beispielhafte Darstellung einer Funktionsregel der in den Fig. 3 und 4 dargestellten Oberflächenkomponenten,

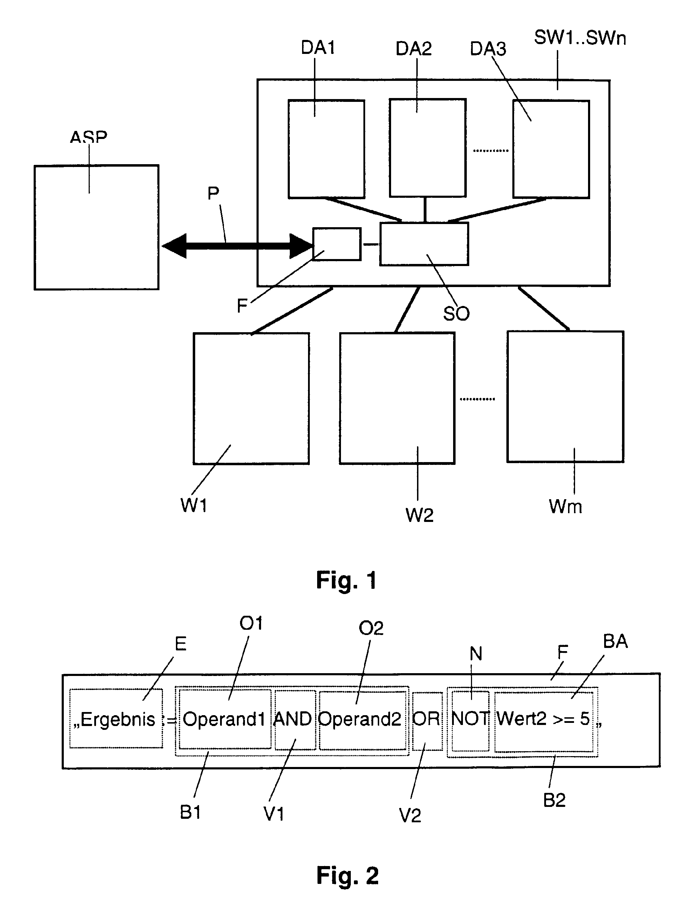

Figur 1 zeigt ein Blockschaltbild zum Grundaufbau einer Softwarekomponente SW und zu deren Einbettung in verschiedene Programmierwerkzeuge W1..Wm. Die Softwarekomponente SW steht als Repräsentant für den Grundaufbau einer Vielzahl von Softwarekomponenten SW1..SWn. Die Softwarekomponente SW enthält ein zentrales Softwareobjekt SO, das die der Softwarekomponente SW zugeordneten Funktionsregeln verwaltet. Dem Softwareobjekt SO sind die Darstellungsarten DA1..DAm zugeordnet. Die Darstellungsarten DA1..DAm dienen der graphischen Darstellung der Funktionsregeln F innerhalb der Softwarekomponente SW in den verschiedenen Programmierwerkzeugen W1..Wz. Ein Programmierwerkzeug unterstützt dabei in der Regel mehrere Darstellungsarten. Das Softwareobjekt SO kapselt somit alle darstellungsspezifischen Eigenschaften der Funktionsregeln (also einem Bestandteil eines Automatisierungsprogramms ASP), was mit Hilfe eines Pfeiles P zwischen dem Automatisierungsprogramm ASP und den Funktionsregeln F veranschaulicht ist.

Figur 2 zeigt eine schematische Darstellung zum Grundaufbau einer aus boole'schen Ausdrücken aufgebauten Funktionsregel F. Die Funktionsregel F definiert ein Ergebnis E als Verknüpfung zweier boole'scher Ausdrücke B1, B2. Der erste boole'sche Ausdruck B1 besteht aus einem ersten Operanden O1 aus einer ersten Verknüpfung V1 sowie aus einem zweiten Operanden O2. Der zweite boole'sche Ausdruck B2 besteht aus einer Negierung N sowie aus einer Bedingungsangabe BA der Form "Wert 2 >= 5". Der erste boole'sche Ausdruck B1 und der zweite boole'sche Ausdruck B2 sind über eine zweite Verknüpfung V2, einem "OR" miteinander verknüpft.

Wie aus Figur 2 ersichtlich, enthält die Funktionsregel F ein einheitliches gemeinsames Format in Form von boole'schen Ausdrücken B1, B2. Die so gebildete Zeichenkette kann in beliebigen Darstellungsarten DAi (vergleiche Figur 1) benutzt werden.

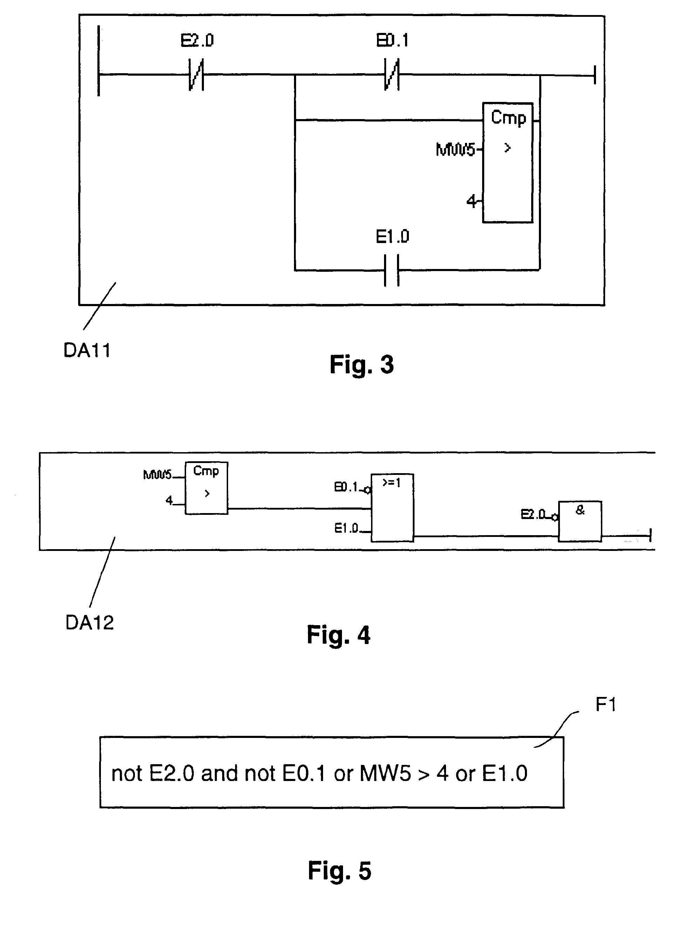

Figur 3 zeigt eine beispielhafte Darstellung DA11 als Kontaktplan, wie er beispielsweise im Zusammenhang mit einem Automatisierungsprogramm (vergleiche Figur 1) zum Einsatz kommt. Der Darstellung DA11 ist eine Funktionsregel zugeordnet, wie sie in Figur 5 in boole'scher Form dagestellt ist.

Figur 4 zeigt eine beispielhafte Darstellung DA12 als Funktionsplan. Der Darstellung DA12 liegt dabei wiederum die in Figur 5 als boole'scher Ausdruck gezeigte Funktionsregel zugrunde.

Figur 5 zeigt eine erste beispielhafte Darstellung einer Funktionsregel F1 für die Darstellungen in den Figuren 3 und 4. Die Funktionsregel F1 besteht, wie bereits im Zusammenhang mit Figur 2 prinzipiell erläutert wurde, aus einem einheitlichen gemeinsamen Datenformat, welches aus boole'schen Ausdrücken zusammengesetzt ist. Ein derartiges Datenformat ist unabhängig von der verwendeten Darstellungsart und somit programmiersprachen- und plattformunabhängig verwendbar.

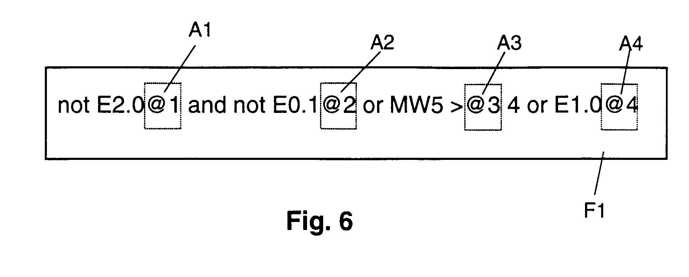

Figur 6 zeigt eine zweite beispielhafte Darstellung einer Funktionsregel F1 für die Darstellungen in den Figuren 3 und 4. Der Aufbau der Funktionsregel F1 entspricht dabei im wesentlichen dem Aufbau der Funktionsregel von Figur 5. Im Unterschied hierzu sind den Bestandteilen der Funktionsregel F1 zur Identifikation der Bestandteile jeweils Attribute A1..A4 zugeordnet. Die Attribute A1..A4 bestehen bei den in Figur 6 dargestellten Ausführungsbeispiel aus der Zuordnung der Zeichen @1, @2, @3, @4. Hierdurch wird es möglich, mehrfach vorkommende Operanden voneinander zu unterscheiden.

Im folgenden sollen zusammenfassend nochmals die Vorteile der Erfindung aufgelistet werden:
- Durch die Zeichenkettendarstellung kann ein einfacher Datenaustausch z.B. zum Zweck der Persistenz, Clipboard, ... erfolgen
- Die Verwendung einer Zeichenkette erlaubt einen programmiersprachen- und plattformunabhängigen Zugriff auf die Daten
- Es lassen sich weitere Darstellungsarten realisieren, die
   - ... auf diesem Format arbeiten
   - ... sich mit relativ geringem Aufwand in ein bereits existierendes System einbinden lassen
   - ... bereits existierende Daten interpretieren können
- Durch die Verwendung von Zeichenketten besteht die Möglichkeit, das Datenformat zu erweitern und dadurch neue Sprachkonstrukte zu unterstützen
- Durch das Konzept der Attributierung von Bestandteilen der Bedingung lassen sich Zusatzinformationen speichern, die eine Integration weiterer Konzepte erlauben
   - z.B. kann ein Attribut zur Identifizierung von Bestandteilen der Bedingung eingeführt werden, wodurch beispielsweise festgelegt werden kann, welches Element selektiert sein soll oder über die ein Statuswert zur Visualisierung zugeordnet werden kann.

Es erfolgt eine Abstraktion von den konkreten Darstellungsarten hin zu einem tragfähigen, erweiterbaren, gemeinsamen Datenformat. Durch die Attributierung von boole'schen Ausdrücken besteht die Möglichkeit zur Hinterlegung weiterer Informationen.

Im folgenden werden mögliche Realisierungen der boole'schen Verknüpfungen gezeigt:
- Darstellung der boole'schen Zeichenkette mit Hilfe von AND, OR, NOT, ... z.B. Ergebnis = A AND B OR NOT C
- Darstellung der boole'schen Zeichenkette mit Hilfe von +, *, !, ... z.B. Ergebnis = a * b + !c
- Darstellung der boole'schen Zeichenkette mit Hilfe von &, |, !, ... z.B. Ergebnis = a & b | !c
- Darstellung der boole'schen Zeichenkette mit Hilfe von XML-Tags z.B.<Expression AssignedTo=Ergebnis, Type=Resetting>

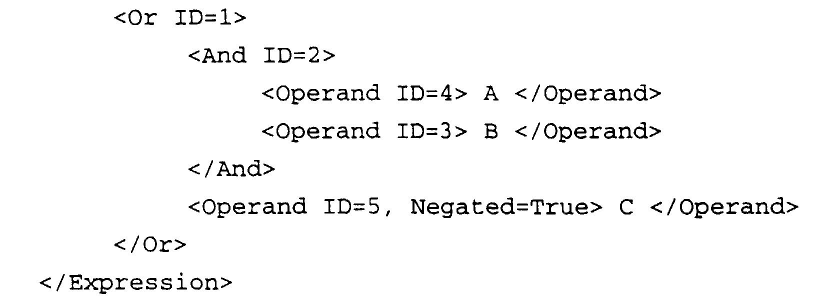

Zusammenfassend betrifft die Erfindung somit ein Softwareobjekt, ein System und ein Verfahren zur Abbildung von Funktionsregeln für ein Automatisierungsprogramm mit Mehrfachnutzung für verschiedene Programmierwerkzeuge. Zur Erzielung eines gemeinsamen Datenformats wird vorgeschlagen, ein aus Zeichenketten bestehendes Datenformat zu verwenden, das einen boole'schen Ausdruck enthält, wobei der boole'sche Ausdruck mindestens einem Ergebnis als Funktionsregel zugewiesen werden kann.

## Patentansprüche

1. Softwareobjekt (SO) zur Bearbeitung von einer Softwarekomponente (SW) zugeordneten Funktionsregeln (Fi) für ein Automatisierungsprogramm (ASP),
**dadurch gekennzeichnet,**
daß die Funktionsregeln ein aus einer Zeichenkette bestehendes gemeinsames Datenformat aufweisen, das mindestens einen boole'schen Ausdruck (B) enthält, der mindestens einem Ergebnis (E) zugeordnet ist.

2. Softwarekomponente nach Anspruch 1,
**dadurch gekennzeichnet,**
daß mindestens ein boole'scher Ausdruck (B) ein Attribut (A) zur Unterscheidung von Operanden des boole'schen Ausdrucks (B) aufweist.

3. System zur Erstellung, Steuerung und/oder Überwachung eines technischen Prozesses mit mindestens einem Softwareobjekt (SO) zur Bearbeitung von einer Softwarekomponente (SW) zugeordneten Funktionsregeln (F)
**dadurch gekennzeichnet,**
daß die Funktionsregeln ein aus einer Zeichenkette bestehendes gemeinsames Datenformat aufweisen, das mindestens einen boole'schen Ausdruck (B) enthält, der mindestens einem Ergebnis (E) zugeordnet ist.

4. System nach Anspruch 3,
**dadurch gekennzeichnet,**
daß mindestens ein boole'scher Ausdruck (B) ein Attribut (A) zur Unterscheidung von Operanden des boole'schen Ausdrucks (B) aufweist.

5. Verfahren zur Erstellung, Steuerung und/oder Überwachung eines technischen Prozesses mit mindestens einem Softwareobjekt (SO), bei dem dem Softwareobjekt (SO) Funktionsregeln (F) eines Automatisierungsprogramms (ASP) zugeordnet werden und bei dem die Funktionsregeln (F) aus einem aus einer Zeichenkette bestehenden gemeinsamen Datenformat gebildet werden, das mindestens einen boole'schen Ausdruck (B) enthält, dem mindestens ein Ergebnis (E) als Funktionsregel (F) zugeordnet ist.

6. Verfahren nach Anspruch 5,
**dadurch gekennzeichnet,**
daß mindestens ein boole'scher Ausdruck (B) ein Attribut (A) zur Unterscheidung von Operanden des boole'schen Ausdrucks (B) aufweist.
